(19) **Europäisches Patentamt**

**European Patent Office**

**Office européen des brevets**

(11) **EP 0 336 019 B2**

(12) **NOUVEAU FASCICULE DE BREVET EUROPEEN**

(45) Date de publication et mention de la décision concernant l'opposition:
**01.10.2003 Bulletin 2003/40**

(51) Int Cl.7: **H02M 1/12**, H02M 7/527

(45) Mention de la délivrance du brevet:
**18.11.1993 Bulletin 1993/46**

(21) Numéro de dépôt: **88200623.2**

(22) Date de dépôt: **05.04.1988**

(54) **Modulateur multiniveau en largeur d'impulsion**

Modulator zur mehrstufigen Impulsbreitenmodulation

Multilevel pulse width modulation modulator

(84) Etats contractants désignés:
**AT BE CH DE ES FR GB GR IT LI LU NL SE**

(43) Date de publication de la demande:
**11.10.1989 Bulletin 1989/41**

(60) Demande divisionnaire:
**00201035.3**

(73) Titulaire: **ALSTOM BELGIUM S.A.**
**6001 Marcinelle (BE)**

(72) Inventeurs:
• **Bingen, Guy**
**B-1150 Bruxelles (BE)**
• **Velaerts, Bruno**
**B-1410 Waterloo - Bruxelles (BE)**
• **Van Eck, Jean Louis**
**B-1420 Braine l'Alleud (BE)**

(74) Mandataire: **Van Malderen, Michel et al**
**Office van Malderen**
**85/043 Boulevard de la Sauvenière**
**4000 Liège (BE)**

(56) Documents cités:
**EP-A- 0 161 527      DE-A- 3 105 094**
**GB-A- 2 146 858      US-A- 3 436 644**
**US-A- 4 270 163      US-A- 4 319 316**
**US-A- 4 635 177      US-A- 4 646 221**

• **IEEE TRANSACTIONS ON INDUSTRIAL ELECTRONICS, vol. IE-31, no. 3, août 1984, pages 272-276, IEEE, New York, US; M. VARNOVITSKY: "Development and comparative analysis of a pulse-width modulation strategy"**
• **Nabae et al.:"A New Neutral-Point-Clamped PWM Inverter" IEEE Transactions on Industry Applications, Vol.IA-17, No.5, Septembre/Octobre 1981, pages 518-523**

EP 0 336 019 B2

**Description**

La présente invention concerne un nouveau modulateur en largeur d'impulsion permettant de produire un signal modulé à plusieurs niveaux pouvant notamment être utilisé avantageusement pour la commande d'onduleurs de tension dans des applications en haute tension.

La modulation en largeur d'impulsion permet de générer des formes d'ondes périodiques constituées d'impulsions dont la largeur est variable en fonction d'un ou plusieurs paramètres. Le procédé de modulation en largeur d'impulsion le plus répandu consiste à comparer une onde modulante (généralement sinusoïdale) à une onde porteuse de fréquence plus élevée que celle de l'onde modulante et de déterminer le niveau continu discret que it prendre l'onde de tension à chaque instant. Ce procédé est quelquefois appelé modulation bipolaire. Pratiquement, à chaque instant d'intersection de l'onde modulante avec l'onde porteuse le niveau de l'onde de tension commute entre un niveau supérieur et un niveau inférieur ou inversement. Ce phénomène de commutation rapide et répétée à cadence élevée provoque l'apparition d'harmoniques de fréquence dans la tension de sortie.

Un procédé de modulation à deux niveaux en largeur d'impulsion est illustré dans l'article de M. VARNOVITSKY intitulé "Development and comparative analysis of a pulse-width modulation strategy" publié dans IEEE Transaction on Industrial Electronics, vol. IE-31, n·3, août 1984, page 272-276.
Il n'est pas applicable à la technologie multiniveau.

Une application exemplaire de la modulation en largeur d'impulsion est son utilisation dans les modulateurs pilotant les onduleurs de tension destinés à la commande en vitesse variable de machines synchrones ou asynchrones, en particulier en traction ferroviaire.

Le but est dans ce cas de fournir au moteur un système triphasé de tension le plus proche possible du système triphasé sinusoîdal équilibré, variable en fréquence et en amplitude. Les onduleurs de tension sont des dispositifs bien connus qui utilisent généralement des montages à thyristors.

Actuellement, on tend de plus en plus à utiliser des thyristors de type GTO en lieu et place du thyristor classique qui exige des circuits d'extinction assez lourds. Toutefois, dans l'état actuel de la technologie, les thyristors GTO ne présentent guère de tenue en tension satisfaisante pour les applications en haute tension comme c'est le cas en traction ferroviaire, par exemple, où des tensions de 3 kV sont usuelles. Dès lors, dans les montages d'onduleurs utilisés en haute tension il importe de veiller à ce qu'un thyristor GTO quelconque n'ait jamais à tenir un niveau de tension trop élevé et l'on se trouve par conséquent confronté au problème de la mise en série de thyristors GTO dont la synchronisation des coupures est difficile à assurer.

Le problème à résoudre est donc de réaliser un modulateur convenant pour piloter un onduleur de tension utilisant des thyristors GTO comme éléments de commutation pour des applications en haute tension et convenant en même temps pour générer des formes d'ondes de tension ayant un contenu harmonique aussi réduit que possible car du contenu harmonique dépendent les pointes de courant et les pertes dans le moteur constituant la charge commandée.

l'invention concerne un nouveau modulateur multiniveaux pour piloter un onduleur de tension dans des applications en haute tension. Suivant l'invention, un modulateur multiniveaux se caractérise par un générateur de fonction organisé pour produire un signal représentant l'espacement entre des niveaux limites inférieur et supérieur, un générateur de porteuse organisé pour produire une onde porteuse de fréquence prédéterminée, deux générateurs d'onde modulante organisés pour produire deux ondes modulantes distinctes ayant une fréquence et une amplitude de crête prédéterminées, ces générateurs d'onde modulante répondant au signal d'espacement, et un comparateur organisé pour comparer les amplitudes des ondes modulantes à l'amplitude de l'onde porteuse et pour produire un signal ayant le niveau continu discret inférieur chaque fois que l'onde modulante supérieure est au-dessous de l'onde porteuse, pour produire un signal ayant le niveau continu discret intermédiaire chaque fois que l'onde porteuse est comprise entre les deux ondes modulantes, et pour produire un signal ayant le niveau continu discret supérieur chaque fois que l'onde modulante inférieure est au-dessus de l'onde porteuse.

L'invention est exposée en détails dans ce qui suit à l'aide des dessins ci-annexés. Dans ces dessins :

-  la figure 1 est un schéma par blocs d'un modulateur en largeur d'impulsions mettant en oeuvre la présente invention,
-  la figure 2 est un schéma d'un onduleur de tension typique pouvant être piloté avec avantages par un modulateur en largeur d'impulsions selon l'invention,
-  la figure 3 est un graphique illustrant des formes d'ondes exemplaires utilisées dans le modulateur selon l'invention et la forme d'onde produite selon l'invention,
-  la figure 4 est un diagramme montrant un spectre exemplaire de la tension entre phases avec un modulateur selon l'invention,
-  la figure 5 est un graphique illustrant des formes d'ondes exemplaires dans un procédé de modulation antérieur (modulation unipolaire),
-  la figure 6 est un diagramme montrant un spectre typique de la tension entre phases avec un modulateur unipolaire selon l'art antérieur,
-  la figure 7 montre des courbes illustrant les performances d'un modulateur selon l'invention,
-  la figure 8 montre des courbes illustrant les performances d'un modulateur unipolaire selon l'art antérieur, et

- la figure 9 est un graphique montrant des courbes du facteur de perte en fonction du taux de modulation pour différents types de modulation.

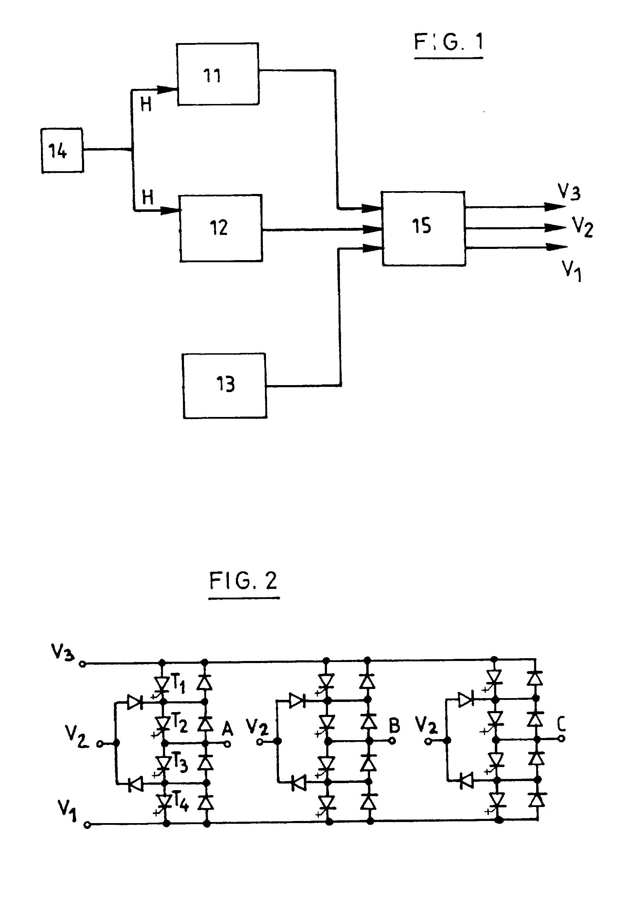

La figure 1 montre un schéma par blocs d'un modulateur en largeur d'impulsion selon l'invention. Ce modulateur, selon l'invention, est organisé pour produire un signal modulé ayant par exemple trois niveaux continus discrets distincts que l'on désignera V1, V2 et V3. Deux générateurs d'onde modulante 11 et 12 engendrent deux ondes modulantes, par exemple des ondes sinusoïdales, de fréquence et d'amplitude de crête prédéterminées. Selon l'invention, les générateurs 11 et 12 engendrent les ondes modulantes en fonction d'un paramètre H dont le rôle sera expliqué plus loin. Un générateur de porteuse 13 engendre une onde porteuse, par exemple une onde triangulaire, ayant une fréquence prédéterminée. Le paramètre H est un signal généré par un générateur de fonction 14 qui produit le signal H en fonction du taux de modulation k choisi, comme on le verra plus loin. Le taux de modulation k est le rapport de l'amplitude de la modulante à l'amplitude de la porteuse. Les signaux de sortie des générateurs 11, 12 et 13 sont appliqués à des entrées d'un comparateur 15 organisé pour comparer les niveaux instantanés des ondes modulantes à l'onde porteuse et pour déterminer à chaque instant celui des trois signaux continus discrets V1, V2 ou V3 que doit prendre l'onde de tension de sortie d'après les amplitudes relatives des signaux d'entrée.

Le comparateur 15 est organisé pour générer une onde de tension dans laquelle chaque transition entre le niveau de tension inférieur continu discret et le niveau de tension supérieur continu discret ou inversement est réalisée au moyen d'au moins deux commutations successives de même sens, la première commutation se faisant entre un premier niveau continu discret limite (par exemple V1) et un niveau continu discret intermédiaire (par exemple V2) et la deuxième commutation se faisant entre ledit niveau discret intermédiaire et un second niveau continu discret limite (par exemple V3).

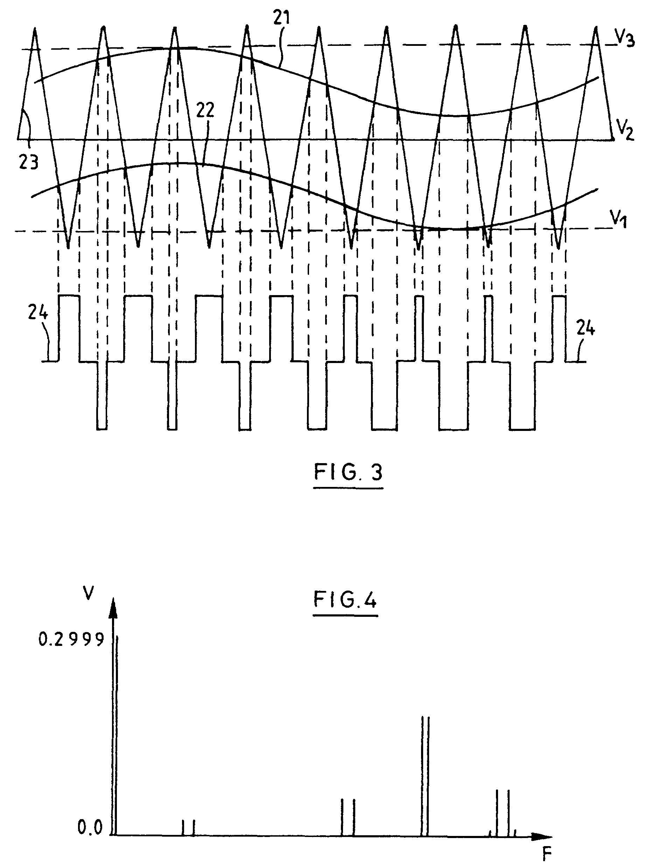

L'invention est illustré par la figure 3 dans laquelle sont représentées deux ondes modulantes exemplaires 21 et 22 et une onde porteuse 23 de forme triangulaire isocèle, ainsi que trois niveaux prédéterminés V1, V2 et V3. L'onde modulée engendrée selon l'invention est représentée par la forme d'onde 24.

Les intersections de l'onde modulante supérieure 21 avec l'onde porteuse 23 déterminent dans la forme d'onde 24 les commutations entre le niveau continu intermédiaire V2 et le niveau continu inférieur V1.

Lorsque l'onde modulante supérieure 21 est au-dessus de l'onde porteuse, la forme d'onde 24 adopte le niveau continu intermédiaire V2. Lorsque l'onde modulante supérieure 21 est au-dessous de l'onde porteuse, la forme 24 adopte le niveau continu inférieur V1.

Les intersections de l'onde modulante inférieure 22 avec l'onde porteuse déterminent dans la forme d'onde 24 les commutations entre le niveau continu intermédiaire V2 et le niveau continu supérieur V3. Lorsque l'onde modulante inférieure 22 est au-dessous de l'onde porteuse, la forme d'onde 24 adopte le niveau continu intermédiaire V2. Lorsque l'onde modulante inférieure 22 est au-dessus de l'onde porteuse, la forme d'onde 24 adopte le niveau continu supérieur V3.

Les paramètres classiques d'une modulation engendrée ainsi qu'il est bien connu, sont le taux de modulation k, c'est-à-dire le rapport de l'amplitude de la modulante à l'amplitude de la porteuse, et le rapport de modulation M, c'est-à-dire le rapport de la fréquence de la porteuse à la fréquence de la modulante. A ces paramètres classiques k et M s'ajoute ici, selon l'invention, un paramètre supplémentaire l'espacement H entre les deux seuils limite V1 et V3 entre lesquels peuvent évoluer les ondes modulantes 21 et 22. Le rôle du générateur de fonction 14 de la figure 1 est précisément d'engendrer un signal représentant le paramètre H en fonction du taux de modulation k choisi.

Grâce à la commutation entre trois niveaux de tension discrets, l'invention permet de réaliser des modulateurs capables de piloter un onduleur de tension utilisant des thyristors GTO dans des applications en haute tension. La figure 2 montre un schéma d'onduleur pouvant être piloté avec avantage par un modulateur selon l'invention. Il s'agit d'un modulateur pour tension triphasée. Les trois niveaux de tension discrets dont il a été question dans ce qui précède sont appliqués aux bornes notées V1, V2 et V3. Considérant à titre d'exemple la première branche de quatre éléments de commutation en série, on observe que lorsque T1 et T2 sont conducteurs, la charge est connectée à la tension V3, lorsque T2 et T3 sont conducteurs, la charge est connectée à la tension intermédiaire V2 et lorsque T3 et T4 sont conducteurs, la charge est connectée à la tension V1. Il y a donc toujours deux éléments de commutation en série et la tenue en tension de ces éléments ne pose aucun problème. La même observation s'applique aux autres branches de l'onduleur. Les éléments de commutation peuvent donc être constitués de thyristors de type GTO.

D'autre part, un développement en double série de Fourier montre que, dans l'expression de la tension, les termes qui représentent les harmoniques de la forme d'onde modulée comprennent tous un facteur multiplicateur de la forme cosinus A où

$$A = p\ \frac{\pi}{2}\ (H\text{-}k)$$

avec

p =      indice de la bande dans laquelle se trouve l'harmonique considéré,

k =     taux de modulation,

H =     hauteur de modulation selon l'invention, c'est-à-dire écart entre les seuils supérieur et inférieur.

La présence du facteur cosinus A est particulièrement intéressante car elle montre qu'en réglant le paramètre H en fonction de k, on peut contrôler et maîtriser l'importance des harmoniques.

En effet, du fait de la présence du facteur cosinus A, les harmoniques ont obligatoirement des amplitudes réduites ou inchangées, cette maîtrise pouvant même aller jusqu'à l'annulation de tous les harmoniques dans une bande donnée, par exemple la bande p=2 qui s'avère généralement fort gênante en pratique. La figure 4 illustre un spectre exemplaire de la tension de sortie entre phases engendrée avec k = 0,3 et H = 0,8. L'axe des abscisses porte l'échelle des fréquences. La tension entre phases en ordonnées est exprimée en pourcentage de l'amplitude maximale (k = 1).

On peut observer que pour la première bande d'harmoniques (p=1), l'effet du facteur cosinus A n'est guère très marqué, mais que son influence croît à mesure que le paramètre k diminue. Ceci est particulièrement favorable dans les cas de modulation à fondamentales faibles.

Pour les bandes d'harmoniques suivantes, on constate que l'on peut bien souvent annuler le facteur cosinus A en adaptant judicieusement le paramètre H en fonction du taux de modulation k. En particulier, il s'est avéré possible d'annuler pratiquement les harmoniques de la bande p=2 pour des taux de modulation k inférieurs à 0,5. Or cette bande est souvent importante et gênante dans les modulateurs triphasés à porteuse unique connus.

En résumé, l'invention permet avantageusement de réduire le contenu harmonique de l'onde modulée, ce qui a un effet très favorable sur les performances d'une machine alimentée par un onduleur de tension piloté par un modulateur multiniveau selon l'invention, ainsi qu'on le montrera plus loin.

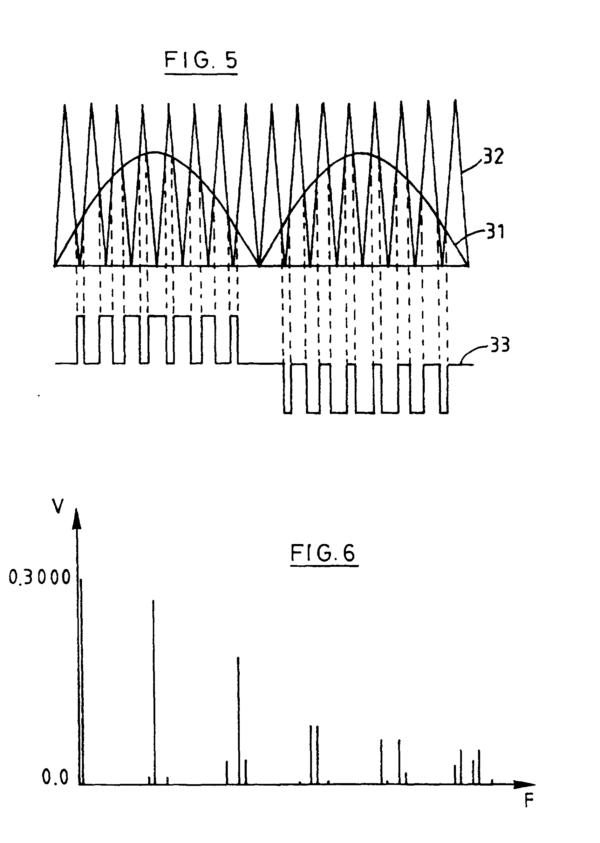

Il est intéressant de comparer les performances de l'invention avec les performances d'un procédé de modulation connu produisant également une tension à trois niveaux. Il s'agit d'un procédé de modulation par lequel, sur une alternance de l'onde fondamentale, le niveau de la i tension se trouve toujours commuté entre le niveau intermédiaire et un même niveau extrême, soit le niveau inférieur dans une alternance et le niveau supérieur dans l'autre alternance. Ce type de modulation sera appelé modulation unipolaire dans la suite. La figure 5 illustre une onde modulante exemplaire 31, une onde porteuse typique 32 et l'onde modulée 33 engendrée suivant le procédé de modulation unipolaire. Un spectre typique de la tension entre phases à la sortie d'un modulateur unipolaire connu est montré à la figure 6. L'axe des abscisses porte l'échelle des fréquences et en ordonnées, la tension entre phases est exprimée en pourcentage de l'amplitude maximale (k = 1). Ce graphique est à comparer à celui de la figure 4 qui montre un spectre exemplaire de la tension entre phases à la sortie d'un modulateur selon l'invention. Dans la figure 6 on observe que les harmoniques dans la première bande (p=1) sont plus importants que dans la figure 4 et surtout que les harmoniques de la deuxième bande (p=2) sont également importants alors que les harmoniques de cette bande sont annulés selon l'invention (figure 4). D'autre part, la modulation unipolaire est restreinte dans son application par la contrainte technologique du temps minimum de conduction, imposée par les thyristors GTO assurant les commutations dans l'onduleur. Cette contrainte est très restrictive aux faibles valeurs du taux de modulation k, pour des rapports de modulation M élevés, c'est-à-dire dans la gamme de fonctionnement classique de la modulation engendrée.

Le nouveau procédé de modulateur ne souffre pas de ce défaut. La largeur des créneaux de l'onde de tension n'approche le temps minimum de conduction sur les niveaux extrêmes (V1 et V3) que pour les valeurs de H très proches de l'unité, qui ne sont pas requises dans la gamme de fonctionnement précitée. D'autre part, deux commutations successives encadrant une période de conduction au niveau de tension intermédiaire ne délimitent pas un temps minimum de conduction, ces commutations impliquant chacune un thyristor GTO différent (voir figure 2).

Les sorties du comparateur 15 de la figure 1 peuvent être connectées pour piloter un onduleur de tension et lui appliquer par exemple les tensions 0, 1500 V et 3000 V destinées à la commande en vitesse variable d'un moteur asynchrone utilisé en traction ferroviaire. Dans cette application particulière, la réduction du contenu harmonique qui résulte directement du modulateur multiniveau selon l'invention a pour conséquence favorable et avantageuse d'améliorer considérablement les performances du moteur.

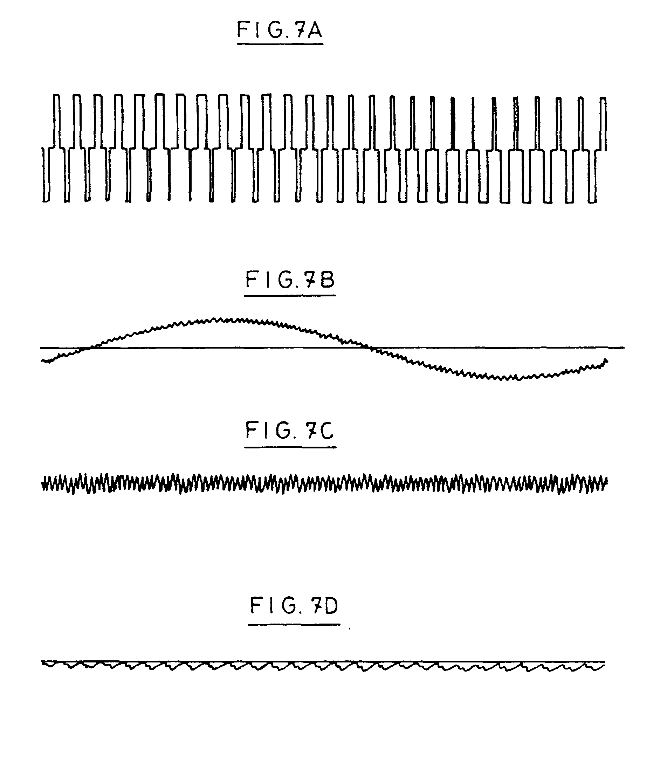

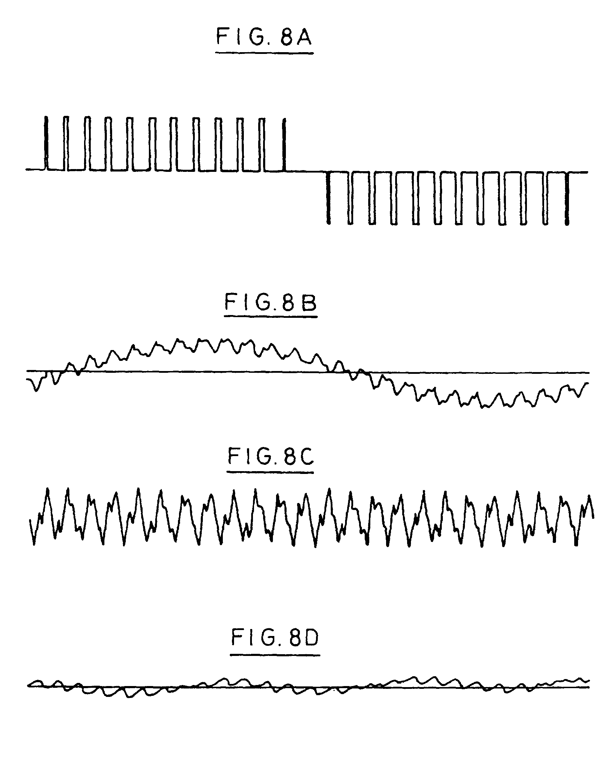

Des simulations par ordinateur du fonctionnement d'une machine asynchrone ont été effectuées dans le cas d'une alimentation en tension triphasée fournie par un onduleur de tension piloté par un modulateur selon l'invention et par un modulateur unipolaire selon l'art antérieur, dans le cas d'un taux de modulation k = 0,3. Les performances obtenues avec le modulateur selon l'invention sont illustrées par les diagrammes de la figure 7 et les performances obtenues avec le modulateur selon l'art antérieur sont illustrées par les diagrammes de la figure 8. Ces figures montrent l'onde de tension modulée (diagramme A), la courbe du courant statorique (diagramme B), la courbe du couple (diagramme C) et la tension du point milieu (diagramme D) en fonction du temps.

Comparant les figures 7 et 8, on constate que dans la figure 8, l'onde de courant (diagramme B) porte une oscillation relativement importante alors que dans la figure 7 (onduleur piloté selon l'invention), l'oscillation superposée à l'onde de courant est très faible. La comparaison des courbes du couple (diagrammes C) et de la tension du point milieu (diagrammes D) est également significative et favorable au modulateur selon l'invention. Les exemples illustrés par les figures 7 et 8 font référence à un même temps de conduction.

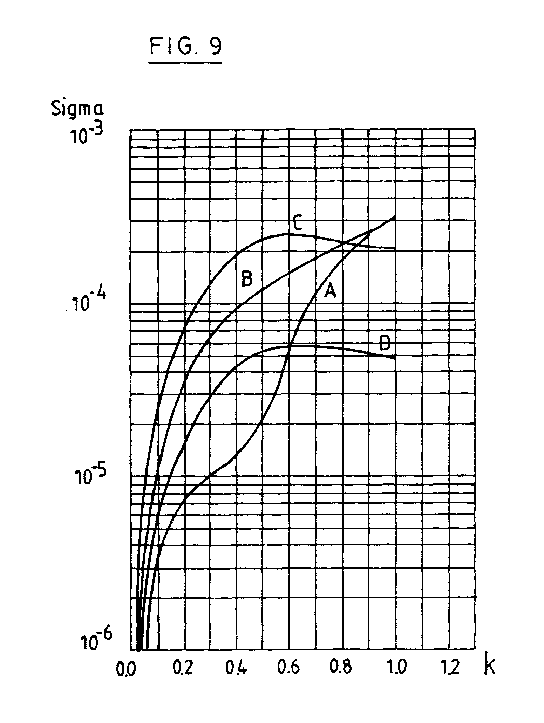

l'invention s'avère également très favorable si l'on considère le facteur de perte dans la machine. Le facteur de perte est défini comme étant le carré de la somme des harmoniques pondérés par leur ordre. La figure 9 montre des courbes du facteur de perte Sigma en fonction du taux de modulation k pour différents types de modulation. La courbe A correspond à l'invention pour un rapport de modulation M = 27; la courbe B correspond à une modulation bipolaire pour un rapport de modulation M = 27; les courbes C et D correspondent à une modulation unipolaire pour des rapports de modulation M = 26 et M = 52. Pour ce dernier exemple, la restriction du temps minimum de conduction n'est pas prise en compte, et le rapport de modulation est doublé afin d'obtenir une équivalence entre les deux modulations comparées, du point de vue du nombre de commutations effectuées en une période de la modulante.

Quoi qu'il en soit, on constate dans la figure 9 que les courbes B, C et D relatives aux modulations bipolaire et unipolaire sont bien moins favorables que la courbe A selon l'invention pour un taux de modulation inférieur à k = 0,6, c'est-à-dire pour la gamme des taux de modulation généralement utilisée pour les modulations engendrées, même dans les modulateurs à microprocesseur.

**Revendications**

1. Modulateur multiniveau pour produire un signal comprenant des impulsions de largeur variable, **caractérisé en ce qu'**il comprend un générateur de fonction (14) organisé pour produire un signal représentant l'espacement (H) entre des niveaux limites inférieur et supérieur (V1, V3), un générateur de porteuse (13) organisé pour produire une onde porteuse (23) de fréquence prédéterminée, deux générateurs d'onde modulante (11, 12) organisés pour produire deux ondes modulantes distinctes (21, 22) ayant une fréquence et une amplitude de crête prédéterminées, ces générateurs (11, 12) répondant audit signal d'espacement (H), et un comparateur (15) organisé pour comparer les amplitudes des ondes modulantes (21, 22) à l'amplitude de l'onde porteuse (23) et pour produire un signal (24) ayant le niveau continu discret inférieur (V1) chaque fois que l'onde modulante supérieure (21) est au-dessous de l'onde porteuse (23), pour produire un signal (24) ayant le niveau continu discret intermédiaire (V2) chaque fois que l'onde porteuse (23) est comprise entre les deux ondes modulantes (21 et 22), et pour produire un signal (24) ayant le niveau continu discret supérieur (V3) chaque fois que l'onde modulante inférieure (22) est au-dessus de l'onde porteuse (23).

2. Modulateur selon la revendication 1, **caractérisé en ce que** le générateur de fonction (24) est organisé pour produire un signal d'espacement (H) en fonction d'un signal représentant le taux de modulation (k).

**Patentansprüche**

1. Multiniveau-Modulator zur Erzeugung eines Signals, das Impulse von variabler Breite aufweist, **dadurch gekennzeichnet, dass** er aufweist: einen Funktionsgenerator (14), der so ausgelegt ist, dass er ein Signal erzeugt, das den Abstand (H) zwischen einem unteren Grenzniveau (V1) und einem oberen Grenzniveau (V3) repräsentiert, einen Trägerwellengenerator (13), der so ausgelegt ist, dass er eine Trägerwelle (23) von vorgegebener Frequenz erzeugt, zwei Wellengeneratoren (11, 12), die so ausgelegt sind, dass sie zwei getrennte modulierende Wellen (21, 22) erzeugen, die eine vorgegebene Frequenz und eine vorgegebene Spitzenamplitude haben, wobei diese Generatoren (11, 12) auf das Abstandssignal (H) ansprechen, und einen Komparator (15), der so ausgelegt ist, dass er die Amplituden der modulierenden Wellen (21, 22) mit der Trägerwelle (23) vergleicht, und jedesmal, wenn die obere modulierende Welle (21) unter der Trägerwelle (23) liegt, ein Signal (24) erzeugt, das das untere diskrete, kontinuierliche Niveau (V1) hat, und jedesmal, wenn die Trägerwelle (23) zwischen den zwei modulierenden Wellen (21 und 22) liegt, ein Signal (24) erzeugt, das das mittlere diskrete, kontinuierliche Niveau (V2) hat, und jedesmal, wenn die untere modulierende Welle (22) über der Trägerwelle (23) liegt, ein Signal (24) erzeugt, das das obere diskrete, kontinuierliche Niveau (V3) hat.

2. Modulator gemäß Anspruch 1, **dadurch gekennzeichnet, dass** der Funktionsgenerator (24) so ausgelegt ist, dass er ein Abstandssignal (H) in Abhängigkeit von einem Signal erzeugt, das den Modulationsgrad (k) repräsentiert.

**Claims**

1. Multilevel modulator for producing a signal comprising impulsions of variable width, **characterized by** the fact that it comprises a function generator (14) organized to generate a signal representing the spacing (H) between inferior and superior limit levels (V1, V3), a bearer generator (13) organized to generate a bearer wave (23) of predetermined frequency, two modulating wave generators (11, 12) organized to generate two discrete modulating waves (21, 22) having a predetermined frequency and peak amplitude, said generators (11, 12) responding to said spacing signal (H), and a comparator (15) organized to compare the amplitudes of the modulating waves (21, 22) with the amplitude of the bearer wave (23), to generate a signal (24) having the inferior continuous discrete level (V1) each time the superior modulating wave (21) is under the bearer wave (23), to generate a signal (24) having the intermediate continuous discrete level (V2) each time the bearer wave (23) is comprised between the two modulating waves (21 and 22), and to generate a signal (24) having the superior continuous discrete level (V3) each time the inferior modulating wave is above the bearer wave (23).

2. Modulator according to claim 1, **characterized by** the fact that the function generator (24) is organized to generate a spacing signal (H) in function of a signal representing the modulation rate (k).

FIG. 1

FIG. 2

FIG. 3

FIG.4

FIG. 5

FIG. 6

FIG.7A

FIG.7B

FIG.7C

FIG.7D

FIG. 8A

FIG.8B

FIG.8C

FIG.8D

## FIG. 9